# EUROPÄISCHE PATENTANMELDUNG

(11) **EP 0 644 413 A2**
(43) Veröffentlichungstag der Anmeldung: **22.03.1995**
(21) Anmeldenummer: 94114247.3
(22) Anmeldetag: 09.09.1994
(51) Int. Cl.: G01N 1/28, G01N 1/40

(54) **Verfahren zur quantitativen Analyse von Probeflüssigkeit**

(30) Priorität: 17.09.1993 DE 4331596
(71) Anmelder: BOEHRINGER MANNHEIM GMBH, D-68298 Mannheim (DE)
(72) Erfinder: Backhaus, Jürgen, Dr., D-68535 Edingen-Neckarhausen (DE); Mischler, Reinhold, D-67063 Ludwigshafen (DE)

(57) **Zusammenfassung**

Die Erfindung betrifft ein Verfahren zur quantitativen Analyse von Probeflüssigkeiten. Eine Probe wird eingetrocknet und mit sichtbarem und/oder infrarotem Licht bestrahlt. Von der Probe und dem Probeträger diffus oder spiegelnd reflektiertes Licht wird detektiert und ausgewertet. Weiterhin betrifft die Erfindung ein System zur Durchführung des erfindungsgemäßen Verfahrens und Probeträger mit diffus oder spiegelnd reflektierender Oberfläche.

## Beschreibung

Die Erfindung betrifft ein Verfahren zur quantitativen Analyse von Probeflüssigkeiten durch Bestrahlen einer im wesentlichen von Lösungsmittel befreiten Probe und Detektieren von diffus von Probe und Probeträger reflektierter Strahlung. Außerdem beinhaltet die Erfindung ein System zur Analyse von Probeflüssigkeiten, mit dem im wesentlichen von Lösungsmittel befreite Proben, die sich auf einem Probeträger befinden, bestrahlt werden und von der Probe ausgesandte Strahlung mit einer Detektionsvorrichtung detektiert wird. Die Erfindung umfaßt außerdem einen Probeträger zur Verwendung in einem erfindungsgemäßen System, bei dem sich eine diffus reflektierende Metallschicht auf einem Träger befindet.

Im Stand der Technik sind Verfahren zur qualitativen Analyse von Probeflüssigkeiten bekannt, bei denen Feststoffe, Dünnschichtchromatogramme oder Trocknungsreste mit Infrarotstrahlung beleuchtet und reflektierte Strahlung ausgewertet wird, um Informationen über Substanzen in der Probe zu erhalten. In der Offenlegungsschrift DE-A-42 33 321 wird ein Mikroanalyseverfahren beschrieben, bei dem Probeflüssigkeit auf einen Kunststoffträger aufgebracht und nachfolgend eingetrocknet wird. In der Offenlegungsschrift werden Maßnahmen beschrieben, die darauf abzielen, eine möglichst große Schichtdicke und eine möglichst ebene Struktur des Trocknungsrestes zu erreichen. Mit dem beschriebenen System wird lediglich ein Teil des Trocknungsrestes mit Infrarotstrahlung bestrahlt und spiegelnd reflektierte Strahlung ausgewertet. Da nur ein Teil des Trocknungsrestes durchstrahlt wird, ist eine quantitative Auswertung nur möglich, wenn genau definierte Abmessungen des Trocknungsrestes sichergestellt werden können, was in der Praxis mit sehr großem Aufwand verbunden ist.

Im Stand der Technik sind weiterhin Verfahren zur Analyse von Flüssigkeiten bekannt, bei denen z. B. Fruchtsäfte auf ein Glasfaservlies aufgebracht werden und durch Detektion von reflektierter Infrarotstrahlung analysiert werden. Die Strahlung durchdringt dabei nur die Oberflächenschicht des Vlieses. Das Verfahren muß für eine quantitative Auswertung empirisch kalibriert werden und ist fehleranfällig, da es durch eine wechselnde Mikrostruktur des Glasfaservlieses gestört wird. Auch bei der Auswertung von Dünnschichtchromatogrammen mit Scannern durchdringt die Strahlung einen nicht genau definierten Teil der Probe und macht daher eine empirische Kalibration notwendig.

Die Patentanmeldung WO 90/15981 befaßt sich mit der Trocknung von Filtermaterialien, auf die Probeflüssigkeiten aufgebracht wurden. Das Trocknungsverfahren stellt bei dieser Anwendung ein zentrales Problem dar, weil bei der Trocknung eine unkontrollierte Migration der Probenbestandteile eintritt, welche die Homogenität des Trocknungsrückstandes negativ beeinflußt. Bei dem in WO 90/15981 beschriebenen Analyseverfahren durchdringt die Strahlung nur einen Teil der Probe und ist daher für eine quantitative Spurenanalytik weniger geeignet.

Der Stand der Technik weist den Nachteil auf, daß eine quantitative Analyse von Probeflüssigkeiten durch Messung der von der Probe reflektierten IR-Strahlung nur möglich ist, wenn aufwendige Maßnahmen bei der Probenvorbereitung ausgeführt werden. Mit den im Stand der Technik bekannten Methoden ist es insbesondere nur ungenügend möglich, quantitative Analysen durchzuführen, wenn Stoffgemische vorliegen.

Aufgabe der Erfindung war es, ein Verfahren und ein System zur quantitativen Analyse von eingetrockneten Probeflüssigkeiten zur Verfügung zu stellen, das Nachteile bekannter Verfahren nicht aufweist. Insbesondere soll die Probenvorbereitung für das Analysenergebnis unkritisch sein und keine aufwendigen Maßnahmen erfordern. Die Genauigkeit bekannter Verfahren sollte für kleine Probevolumina gesteigert werden. Außerdem war es Aufgabe der Erfindung, die quantitative Analyse von mehreren Analyten nebeneinander zu ermöglichen.

Es wurde ein Verfahren zur quantitativen Analyse von Probeflüssigkeiten gefunden, das die Schritte
- Aufbringen einer definierten Menge Probeflüssigkeit auf die Oberfläche eines Probeträgers,
- Trocknung der Probeflüssigkeit zur Erzielung eines Trocknungsrestes, dessen Lösungsmittelgehalt unter 20 Gewichtsprozent liegt,
- Bestrahlung des Trocknungsrestes mit einein Strahlenkegel von Strahlung aus dem infraroten und/oder sichtbaren Bereich des Spektrums in der Weise, daß sich der Trocknungsrest vollständig im Strahlenkegel befindet,
- Detektierung von Strahlung, die von Trocknungsrest und Probeträger diffus reflektiert wurde,
- Auswertung der detektierten Strahlung zur Berechnung der Konzentration eines oder mehrerer Inhaltsstoffe der Probeflüssigkeit,
beinhaltet. Weiterhin betrifft die Erfindung ein System zur Ausführung eines erfindungsgemäßen Verfahrens und Probeträger, die für eine Verwendung im erfindungsgemäßen System geeignet sind.

Bei dem erfindungsgemäßen Verfahren wird eine kleine Probemenge auf die Oberfläche eines Probeträgers aufgegeben und nachfolgend eingetrocknet. Die Aufgabe von Probeflüssigkeit kann mit einer Mikropipette erfolgen. Bevorzugt werden Probemengen unter 50 µl, insbesondere zwischen 0.1 und 10 µl verwendet. Da der gesamte Trocknungsrest der Probeflüssigkeit ausgewertet wird, nutzt das Verfahren die Probemenge optimal aus.

Probemengen unter 1 µl sind nur schwierig mit ausreichend guter Präzision zu pipettieren. Dies gilt besonders für Probematerial wie beispielsweise Humanserum, dessen Oberflächenspannung (40 - 70 dyn/cm) und Viskosität (1,2 - 1,9 cP) in weiten Bereichen schwanken. Als vorteilhaft für die Aufgabe der Probe auf den Probeträger hat sich ein Pipettierverfahren erwiesen, bei dem eine relativ große Probemenge von z. B. 10 µl aufgegeben wird und nach dem Ausspreiten der Flüssigkeit ein Großteil, z. B. 9,5 µl, abgesaugt wird. Die Dosiernadel muß dabei direkten Kontakt zur Trägeroberfläche haben, damit seitlich keine das Ergebnis verfälschende Luft angesaugt wird. Das Absaugen kann mit der gleichen Pipettiernadel erfolgen, mit der die Flüssigkeit aufgegeben wurde.

Das beschriebene Pipettierverfahren ermöglicht es, sehr geringe Mengen genau zu dosieren und liefert darüber hinaus einen relativ ausgedehnten, flachen Probefleck, der für ein erfindungsgemäßes Analyseverfahren günstig ist.

Bei einer weiteren Ausgestaltung des Dosierverfahrens wird eine Probemenge aufgegeben, eine Zeitspanne von mehreren Sekunden bis zu einer Minute gewartet und dann ein Großteil der Probe abgesaugt. Diese Vorgehensweise bietet den Vorteil, daß während der Wartezeit bereits ein Antrocknen der Probe an den Rändern des aufgegebenen Tropfens erfolgt. Bein Eintrocknen des nach dem Absaugen verbleibenden Flüssigkeitsrestes ergibt sich eine Struktur des Trocknungsrestes, die für eine Auswertung besonders günstig ist.

Eine andere Methode zur Erzeugung geringer Probevolumina besteht darin, den Überschuß an aufgegebener Probeflüssigkeit gezielt vom Meßort abzuleiten. Dies ist beispielsweise realisierbar durch Integration von Senken in den Probeträger, die durch Kapillarkräfte Flüssigkeit aufnehmen. Die Menge der am Meßort verbleibenden Probeflüssigkeit ist bestimmt durch Gesamtprobevolumen abzüglich dem Volumen der Senke.

Zur Dosierung geringer Probevolumina, die für ein erfindungsgemäßes Verfahren notwendig sind, eignet sich auch ein Transferdruckverfahren. Bei diesem Verfahren wird ein Stempel mit Probeflüssigkeit befeuchtet und der Stempel mit einem regulierten Druck auf den Probeträger gepreßt. Nach dem Abheben des Stempels von dem Probeträger verbleibt eine Probemenge auf dem Träger, die vom Material des Stempels, dem angewandten Druck, der Probeflüssigkeit und dem Trägermaterial abhängig ist. Insbesondere das Material des Stempels und der Andruck auf den Probeträger können durch Versuche so kalibriert werden, daß die aufgetragene Probemenge einen definierten Wert annimmt.

Als Materialien für den Stempel kommen insbesondere Wattetupfer, mit Filz oder Schaumgummi beschichtete Stempel und andere Materialien in Frage, die ein genügendes Aufnahmevermögen für Flüssigkeiten besitzen.

Als Probeflüssigkeiten im Rahmen der Erfindung sind solche Flüssigkeiten geeignet, die bei Eintrocknung einen festen Rückstand hinterlassen. Dies können z. B. Wasserproben, Fraktionen von Trennprozessen, Lebensmittel und Naturprodukte sein. Besonders vorteilhaft kann das erfindungsgemäße Verfahren im Bereich der klinischen Diagnostik, z. B. von Blut, Plasma, Hämolysat, Serum, Harn, Speichel oder Tränenflüssigkeit eingesetzt werden. Analyte, die mit erfindungsgemäßem Verfahren analysiert werden können, sind insbesondere organische Moleküle wie Glucose, Proteine, Hormone, Glyceride, Lipide, Enzyme, Pharmaka, Drogen und auch Elektrolyte.

Die Eintrocknung der Probeflüssigkeit kann sowohl passiv, d. h. als Verdunstung des oder der Lösungsmittel erfolgen, oder durch spezielle Vorrichtungen aktiv gesteuert werden. Eine Trocknung kann beispielsweise durch Aufblasen von Luft, Erwärmung, Anlegen eines Unterdruckes oder Mikrowellenstrahlung erfolgen.

Die Eintrocknung der Proben kann vorteilhaft auch erfolgen, wahrend der Probeträger in Vibration versetzt wird. Auf diese Weise läßt sich das Höhenprofil des Trocknungsrestes günstig beeinflussen. Eine weitere Möglichkeit, die Gestalt des Trocknungsrestes günstig zu beeinflussen liegt in der Zugabe von Hilfsstoffen zu der Probe. Insbesondere haben sich oberflächenaktive Substanzen wie Detergentien oder auch Proteine als vorteilhaft erwiesen. Der Zusatz von Proteinen oder anderen makromolekularen Stoffen, die eine Kristallbildung unterdrücken, empfiehlt sich insbesondere, wenn Probeflüssigkeiten analysiert werden, die Salze enthalten, wie dies zum Beispiel bei Urin der Fall ist . Mit dem Zusatz der genannten Hilfsstoffe kann ein homogener und zusammenhängender Trocknungsrest erzielt werden.

Das in der Probeflüssigkeit enthaltene Lösungsmittel kann sowohl ein Einzelstoff als auch ein Gemisch verschiedener Stoffe sein. Als Lösungsmittels kommen z. B. Wasser und im Stand der Technik bekannte organische und anorganische Lösungsmittel in Betracht. Unter Lösungsmitteln im Sinne der Erfindung sollten allgemein solche niedermolekularen Substanzen verstanden werden, die andere Stoffe lösen können. Der Begriff Lösungsmittel ist nicht auf Stoffe beschränkt, die hinzugesetzt werden, um eine Auflösung zu erreichen, sondern umfaßt auch solche Stoffe, die beim natürlichen Vorkommen der Proben die Funktion eines Lösungsmittels übernehmen.

Ein vorteihafter Aspekt eines erfindungsgemäßen Verfahrens ist die weitgehende Entfernung des Lösungsmittels, da auf diese Weise störende Strahlungsabsorptionen, die sonst häufig Absorptionen von Analyten überdecken, weitgehend eliminiert werden.

Erfindungsgemäß wird die Probeflüssigkeit nicht vollständig, sondern nur zum Teil eingetrocknet. Als vorteilhaft hat sich ein Restgehalt an Lösungsmittel von ca. 1 % bis 20 % herausgestellt. Bei vollständiger Eintrocknung entstehen amorphe Pulver, die eine reproduzierbare spektroskopische Untersuchung erschweren.

Die Gestalt des durch eines der genannten Trocknungsverfahren erhaltenen Trocknungsrestes kann in einem erfindungsgemäßen Verfahren in weiten Grenzen variieren, ohne daß eine quantitative Auswertung gestört wird. Demnach sind spezielle Maßnahmen, wie z. B. das Pressen des Trocknungsrückstandes, um eine glatte Oberfläche zu erzielen oder das Pressen in eine Form nicht notwendig. Dies ist in sofern wichtig, da die Form des Trocknungsrestes erheblich vom Trocknungsverfahren und der Art der Probeflüssigkeit abhängig ist und somit nur teilweise reguliert werden kann. Es kann erfindungsgemäß jedoch vorteihaft sein, die Probeflüssigkeit in Vertiefungen einzutrocknen, um eine Ausspreitung der Flüssigkeit zu begrenzen oder Trocknungsverfahren anzuwenden, die eine bestimmte Form des Trocknungsrestes begünstigen.

Einen zentralen Aspekt der Erfindung stellt die Oberfläche des Probeträgers dar, auf welche die Probeflüssigkeit zur Trocknung aufgegeben wird. Die Oberfläche ist erfindungsgemäß so beschaffen, daß die Probeflüssigkeit im wesentlichen nicht in sie eindringen kann. Da jede reale Oberfläche eine gewisse Porosität aufweist, findet jedoch stets ein geringfügiges Eindringen von Flüssigkeit in die Oberfläche statt. Erfindungsgemäß werden Oberflächen verwendet, die aufgrund ihrer geringen Porosität nur einen sehr kleinen Teil Probeflüssigkeit (z. B. kleiner 1 %) der Bestrahlung durch den Meßstrahl entziehen.

Die genannten Oberflächen können z. B. Metall- oder metallisierte Kunststoffoberflächen sein. Bei der ersten Variante ist die Oberfläche so beschaffen, daß sie die Meßstrahlung diffus reflektiert. Solche Oberflächen können erhalten werden, indem Metalle, wie z. B. Aluminium, Silber, Platin, Gold oder Legierungen, wie z. B. Messing, an ihrer Oberfläche so behandelt werden, daß sie makroskopisch eben sind, jedoch eine mittlere Rauhtiefe von ca. 0,5 bis 200 µm aufweisen. Solche Rauhtiefen können beispielsweise durch Sandstrahlen der jeweiligen Oberfläche mit Sanden geeigneter Körnung oder durch Aufrauhen einer Oberfläche mit Schleifmitteln erzielt werden. Erfindungsgemäß bevorzugt sind Oberflächen von Probeträgern, bei denen eine dünne, gut reflektierende Metallschicht aus z. B. Chrom, Silber, Platin und insbesondere Gold auf ein rauhes Substrat aufgebracht ist. Da die Metallschichten in der Regel sehr dünn sind, weil sie aufgedampft oder gesputtert werden, muß das Trägermaterial bereits eine Rauhigkeit aufweisen, die eine diffuse Reflexion der Meßstrahlung gewährleistet. Bevorzugte mittlere Rauhtiefen liegen im Bereich von 0,5 bis 50 µm.

Es hat sich erfindungsgemäß herausgestellt, daß auch mittlere Rauhtiefen von unter 0,5 µm vorteilhaft sein können. Dies hat seinen Grund darin, daß die Zahl von Streuzentren höher ist, was zu einer Erhöhung der Intensität der reflektierten Strahlung führt. Für eine gegebene analytische Aufgabenstellung können Rauhtiefe der Oberfläche, Detektionswinkel (gegenüber der Oberflächennormalen) reflektierter Strahlung und eingestrahlte Intensität so aufeinander abgestimmt werden, daß Empfindlichkeit und Genauigkeit der Messung optimal sind.

Darüberhinaus hat sich ebenfalls gezeigt, daß ein erfindungsgemäßes Verfahren mit spiegelnd reflektierter Strahlung durchgeführt werden kann. Für diese Ausführungsform der Erfindung werden Oberflächen - wie die bereits beschriebenen - verwendet, deren mittlere Rauhtiefe jedoch so gering ist, daß keine nennenswerte Streuung auftritt. Besonders geeignet sind Metallbeschichtungen aus Gold, Silber, Platin oder Messing.

Bei einein Analyseverfahren unter Auswertung von spiegelnd reflektierter Strahlung wird Strahlung unter einem Winkel von 5 bis 85 ° zur Oberflächennormalen eingestrahlt und die unter dem gleichen Ausfallswinkel reflektierte Strahlung detektiert. Auch bei dieser Ausführungsform der Erfindung ist es von Bedeutung, daß der Probefleck auf der Trägeroberfläche vollständig von einfallender Strahlung erfaßt wird, um eine integrale Messung zu ermöglichen. Die sonstigen Verfahrensschritte dieser Ausführungsform unter Verwendung spiegelnder Oberflächen entsprechen denen der Messung unter Verwendung diffuser Reflexion. Zur Erfindung gehört daher auch das folgende Verfahren:

Verfahren zur quantitativen Analyse von Probeflüssigkeit, mit den Schritten:
- Aufbringen einer definierten Menge Probeflüssigkeit auf die Oberfläche eines Probeträgers,
- Trocknung der Probeflüssigkeit zur Erzielung eines Trocknungsrestes, dessen Lösungsmittelgehalt unter 20 Gewichtsprozent liegt,
- Bestrahlung des Trocknungsrestes mit einem Strahlenkegel von Strahlung aus dem infraroten und/oder sichtbaren Bereich des Spektrums in der Weise, daß sich der Trocknungsrest vollständig im Strahlenkegel befindet,
- Detektierung von Strahlung, die von Trocknungsrest und Probeträger spiegelnd reflektiert wurde,
- Auswertung der detektierten Strahlung zur Berechnung der Konzentration eines oder mehrerer Inhaltsstoffe der Probeflüssigkeit.

Das Trägermaterial kann seinerseits aus einen der genannten Metalle oder Legierungen bestehen oder aus einem Kunststoff, z. B. Polyethylen, Polypropylen, Polymethacrylat, Polycarbonat, Polystyrol, gefertigt sein. Probeträger oder Trägermaterialien, die gepreßt oder gegossen werden, können direkt beim Herstellungsprozeß mit einer geeigneten Oberflächenrauhigkeit versehen werden.

Bei einer weiteren erfindungsgemäßen Ausführungsform ist der Probeträger so beschaffen, daß er für die verwendete Strahlung zumindestens teilweise durchlässig ist. Im Infrarotbereich kommen für diesen Verwendungszweck z. B. CaF₂, ZnSe. Polyethylen und perfluorierte Polyethylene in Betracht. Bei Messungen im sichtbaren Spektralbereich kommen Materialien, wie Gläser, Polystyrol und Polyacrylate in Frage. Die Unterseite der strahlungsdurchlässigen Träger ist diffus oder spiegelnd reflektierend, was durch eine Metallisierung mit bereits genannten Materialien erreicht werden kann. Diese Ausführungsform eines Probeträgers kann insbesondere für Reagenzienbeschichtungen eingesetzt werden, da sich reflektierende Schicht und Reagenzschicht auf gegenüberliegenden Seiten des Trägers befinden können und hierbei die reflektierende Schicht nicht in direkten Kontakt mit korrosiven Reagenzien kommt.

Zur Durchführung eines erfindungsgemäßen Verfahrens können Strahlungsfrequenzen im Bereich von 300 nm bis 25 µm, bevorzugt von 2.5 bis 25 µm eingesetzt werden. Der als Infrarot bezeichnete Strahlungsbereich soll den Bereich des nahen Infrarots mit umfassen. Erzeugung und Fokussierung genannter Strahlungsarten ist im Stand der Technik hinreichend beschrieben. Es können Strahlungsquellen mit einem kontinuierlichen Spektrum Verwendung finden. Im Rahmen der Erfindung ist jedoch entscheidend, daß Fokussierung des Strahlenbündels und Größe des Trocknungsrestes aufeinander abgestimmt sind. Die Größe des Trocknungsrestes auf der Oberfläche des Probeträgers ist abhängig von der Art der Probeflüssigkeit und der Beschaffenheit der Oberfläche. Erfindungsgemäß befindet sich der Trocknungsrest bei der Messung vollständig im eingestrahlten Strahlungsbündel. Dies macht eine integrale Messung möglich.

Unter einer integralen Messung ist zu verstehen, daß der gesamte Trocknungsrest bestrahlt wird und zumindest ein Teil der vom Trocknungsrest oder dem Träger reflektierten oder gestreuten Strahlung eines durch die Meßanordnung festgelegten Raumwinkels detektiert wird. Die integrale Messung in Kombination mit diffus oder spiegelnd reflektierenden Oberflächen ermöglicht eine quantitative Auswertung der Messung.

Zur Detektion der Strahlung sind im Stand der Technik bekannte Detektoren für den verwendeten Frequenzbereich geeignet. Geeignet sind beispielsweise Halbleiterdetektoren, die mit flüssigem Stickstoff oder Peltierelementen gekühlt sein können. Bevorzugt können Quecksilber-Cadmium-Tellurid-Detektoren oder solche mit deuteriertem Triglycinsulfat eingesetzt werden. Erfindungsgemäß wird Strahlung von dem gesamten Trocknungsrest auf den Detektor geleitet, gegebenenfalls können Fokussiereinrichtungen, wie z. B. Parabolspiegel oder Sammellinsen vorgeschaltet werden. Ebenfalls können Infrarotmikroskope eingesetzt werden, wobei jedoch in der Regel eine Sammelvorrichtung vorgeschaltet werden muß, um von Trocknungsrest und Träger diffus oder spiegelnd reflektierte Strahlung aufzufangen. Es ist erfindungsgemäß ausreichend, wenn nur ein Teil der vom Trocknungsrest ausgehenden Strahlung aufgefangen wird, der jedoch repräsentative Beiträge vom gesamten Trocknungsrest besitzen muß.

Die Erzeugung und Detektion der Strahlung kann mit klassischen Gitter- oder Prismenspektrometer erfolgen, bevorzugt sind jedoch im Stand der Technik bekannte Fourier-Transform-Spektrometer.

Bei dem erfindungsgemäßen Verfahren befindet sich eine dünne, von Lösungsmittel weitgehend befreite Schicht Analysenprobe auf einer Oberfläche. Die geringe Schichtdicke der Probe gewährleistet, daß der verwendete Meßstrahl alle Schichten der Probe durchdringen kann, was für eine quantitative Auswertung der Messung von entscheidender Bedeutung ist. Bei erfindungsgemäßer Anordnung wird der Meßstrahl in der Probe mehrfach gestreut, ehe er an der reflektierenden Oberfläche des Probeträgers umgelenkt wird und von dort, gegebenenfalls nach weiterer mehrmaliger Streuung in der Probe zur Detektion gelangt. Dies führt zu einer Steigerung der Signalausbeute im Gegensatz zur Transmissionsanordnung, da der effektive Lichtweg innerhalb der Probe verlängert wird. Durch Aufrauhung der reflektierenden Probeoberfläche wird die Ausbeute an diffuser Strahlung zusätzlich verstärkt.

Eine weitere Steigerung der Meßempfindlichkeit resultiert daraus, daß die Probe von Lösungsmittel weitgehend befreit ist. Auf diese Weise werden störende Strahlungsabsorptionen durch das/die Lösungsmittel verringert. Zusätzlich kommt der Effekt hinzu, daß durch das Abdampfen des/der Lösungsmittel eine Aufkonzentration der Komponenten in Trocknungsrückstand eintritt, die ebenfalls zu einer Empfindlichkeitssteigerung führt.

Durch Auswertung der erhaltenen Spektren mit chemometrischen Verfahren wird eine Mehrkomponentenanalyse möglich. Im Stand der Technik sind chemometrische Verfahren bekannt, mit denen eine Mehrkomponentenanalyse durchgeführt werden kann, wie z. B. partial least squares (PLS), principle component regression (PCR) und Neuronale Netze (NN). Eine Beschreibung möglicher Auswerteverfahren zur Bestimmung eines oder mehrerer Analyten in einem Substanzgemisch wurde z. B. von D. Haaland in SPIE Vol. **1575,** 8th International Conference on Fourier Transform Spectroscopy (1991) Seiten 87 - 95, gegeben. Ein Vorteil des erfindungsgemäßen Verfahrens ist es, daß bei Verwendung chemometrischer Methoden zwei oder mehrere Analyten nebeneinander nachgewiesen werden können.

Die Erfindung umfaßt weiterhin ein System zur quantitativen Analyse von Probeflüssigkeiten, das eine Strahlungsquelle, deren Strahlung im Bereich von 300 nm bis 25 µm liegt, einen Probeträger, der zumindestens in Teilbereichen Strahlung diffus reflektiert, eine Dosiervorrichtung zur Aufgabe von Probeflüssigkeit auf den Probeträger, eine Detektionsvorrichtung für von der Probe ausgesandte Strahlung und eine Auswerteeinrichtung für Signale der Detektionsvorrichtung beinhaltet und dadurch gekennzeichnet ist, daß Dosierung der Probeflüssigkeit, der Probeträger und Fokussierung so aufeinander abgestimmt sind, daß die Probe auf dem Probeträger vollständig von Strahlung der Strahlungsquelle erfaßt wird.

Bei einem erfindungsgemäßen System werden Fokussierung und Dosierung aufeinander abgestimmt. Eine Fokussierung von Strahlung im infraroten oder sichtbaren Bereich kann mit Linsensystemen und Blenden erfolgen, wobei im Infrarotbereich Linsen aus CaF₂, KCl, KBr und anderen Materialien eingesetzt werden müssen, die eine ausreichende Durchlässigkeit für den zu messenden Spektralbereich besitzen.

Die für die Erfindung wichtige Bedingung, daß sich die Probe vollständig im Strahlkegel der Strahlungsquelle befindet, kann auch dadurch erfüllt werden, daß die Größe der Probe geeignet begrenzt wird. Dies kann dadurch erreicht werden, daß nur eine geringe Menge Probeflüssigkeit aufgegeben wird, die auf der Oberfläche des Testträgers eine Fläche einnimmt, die kleiner als der auf den Testträger fallende Strahlungskegel ist. Die von der aufgegebenen Flüssigkeit beanspruchte Fläche ist zum einen abhängig von der Art der Flüssigkeit, im besonderen ihrer Viskosität und Oberflächenspannung, und zum anderen von der Beschaffenheit der Oberfläche. Demgemäß kann die Oberfläche behandelt werden, um ihre Beschaffenheit zu ändern. Die Oberfläche des Testträgers kann mechanisch modifiziert werden, so daß sie Vertiefungen besitzt, in die die Probeflüssigkeit gegeben wird. Die Vertiefungen können beispielsweise Ränder aufweisen, die senkrecht zur Oberfläche des Testträgers abgebildet sind, oder schräge Ränder. Ebenfalls sind Vertiefungen in Form von Kugelsegmenten oder Paraboloidsegmenten möglich.

Bei einer besonders bevorzugten Ausgestaltung des Probeträgers besitzt dieser eine glatte Oberfläche, die an ausgewählten Stellen aufgerauht ist. Die aufgerauhten Bereiche besitzen bevorzugt eine kreisförmige Gestalt und sind etwas kleiner als der Strahlungskegel des Meßstrahles. Diese Ausfuhrungsform des Probeträgers bietet den Vorteil, daß das Ausspreiten der Probeflüssigkeit auf die aufgerauhten Bereiche beschränkt wird. Es ist daher möglich, ein relativ großes Probevolumen auf einen kleinen Oberflächenbereich aufzubringen, was zu einer hohen Konzentration der zu untersuchenden Substanzen im Strahlungskegel führt. Bei einer bevorzugten Ausfuhrungsform der Probeträger besitzen die aufgerauhten Bereiche einen Durchmesser von 1 bis 20 mm.

Die Ausspreitung von Probeflüssigkeit auf den Träger kann weiterhin durch eine geeignete Oberflächenbeschichtung des Trägers erreicht werden. Bereiche, die zur Aufnahme der Probeflüssigkeit vorgesehen sind, können hydrophil beschichtet werden. Ebenfalls ist mit einer hydrophoben Beschichtung der Umgebung von Probeaufgabebereichen zu erreichen, daß ein Ausspreiten der Probe begrenzt wird. Es kann z. B. eine Teflonmaske aufgesprüht werden, die für wäßrige Probeflüssigkeiten eine hydrophobe Sperre darstellt.

Für eine Beschichtung von Goldoberflächen sind insbesondere Alkylketten mit endständigen Thiolgruppen geeignet, da die Thiolgruppe gut an Goldoberflächen bindet. Für eine hydrophile Beschichtung tragen die Alkylketten beispielsweise Sulfonsäuregruppen, Phosphatreste oder Carboxylfunktionen. Für eine hydrophobe Beschichtung werden bevorzugt längere Alkylketten oder Alkylketten mit organischen Resten eingesetzt. Die Bildung von Oberflächenbeschichtungen und geeignete Substanzen sind z. B. in J.Am.Chem.Soc. 1989, Vol. 111, Seiten 321 -335 sowie in Science, Vol 252, Seiten 1164 - 1167, beschrieben.

Eine weitere Möglichkeit, die gegebenenfalls substituierten Alkylketten an Oberflächen zu binden, liegt in der Verwendung von Photoreaktionen, bei denen reaktive Intermediate freigesetzt werden, die direkt an die Metalloberflächen binden.

In der Praxis wird es nicht zu verhindern sein, daß das detektierte Signal Informationen der Oberfläche des Trägers enthält, da der Strahlungskegel den Trocknungsrest vollständig erfaßt und in der Regel auch angrenzende Stellen der Oberfläche des Probeträgers mitbestrahlt. Für den Probeträger und speziell dessen Oberfläche können Materialien ausgewählt werden, die in Spektralbereichen, die für die Analyse von Bedeutung sind, keine Störung hervorrufen. Besitzen genannte Materialien im Frequenzbereich der Messung eine konstante Absorption, so kann diese vom Meßspektrum subtrahiert werden. Insbesondere die beschriebenen Oberflächenbeschichtungen stellen kein nennenswertes Störsignal dar, da die aufgebrachten Schichten monomolekular sind und somit nur unwesentlich zum Meßsignal beitragen.

Ein weiterer Bestandteil der Erfindung ist ein Probeträger, bei dem auf mindestens einer Oberfläche eines Trägers eine reflektierende Schicht aufgebracht ist, wobei die resultierende mindestens eine Oberfläche dadurch gekennzeichnet ist, daß sie eine Rauhtiefe von weniger als 200 µm, vorzugsweise von 0,5 bis 50 µm, aufweist.

Erfindungsgemäß ist es von Bedeutung, daß die Oberflächen, auf welche die Probeflüssigkeit aufgegeben wird, Licht diffus reflektiert. Erfindungsgemäße Rauhtiefe kann durch Behandlung der Oberfläche mit Schleifmaterialien, Sandstrahlen, Ätzen usw. erzeugt werden. Wie bereits an anderer Stelle beschrieben, kann der Probeträger aus einem Trägermaterial und einer darauf aufgebrachten, reflektierenden Schicht bestehen.

Bei einer weiteren Variante befinden sich Reagenzien auf dem Probeträger, die mit nachzuweisenden Analyten in charakteristischer Weise reagieren. Bevorzugt befinden sich diese Reagenzien in Vertiefungen der Probeträger. Besonders wichtig ist die Möglichkeit der Analyse unter Zusatz von Reagenzien für Enzyme, Elektrolyte, Hormone, Proteine und andere Analyte, die nur in sehr kleinen Konzentrationen auftreten. Bei Enzymen kann beispielsweise die Enzymaktivität genutzt werden, um Farbstoffe freizusetzen, die ihrerseits nachgewiesen werden.

Ein erfindungsgemäßes Verfahren ist ebenfalls geeignet, die Kinetik von Reaktionen, insbesondere von Enzymreaktionen, zu bestimmen. Dies kann beispielsweise mit beschichteten Probeträgern erfolgen, auf deren Oberflächen sich Reagenzien bzw. Enzyme befinden. Beim Aufgeben der Probeflüssigkeit werden die Reagenzien bzw. Enzyme gelöst und reagieren mit Bestandteilen der Probe. Zur Bestimmung der Kinetik werden in zeitlichen Abständen wiederholt Messungen nach erfindungsgemäßen Verfahren durchgeführt und daraus die Kinetik der zu untersuchenden Reaktion ermittelt. Es hat sich herausgestellt, daß eine Bestimmung der Reaktionskinetik auch dann möglich ist, wenn die Probeflüssigkeit auf dem Träger teilweise eingetrocknet wird.

Bei Verwendung von Reagenzien auf dein Probeträger sind solche Ausführungsformen der Probeträger bevorzugt, bei denen sich die Reagenzien auf einer inerten Trägerschicht befinden. Werden z. B. Kunststoffe als Trägermaterialien eingesetzt, so befindet sich die Metallisierung des Probeträgers bevorzugt auf der dem Reagenz abgewandten Seite, um die Korrosion der Metallisierung durch Reagenzieneinwirkung zu verhindern.

Zusätzlich zu den bereits beschriebenen Probeträgern, in die die Probeflüssigkeit nicht oder nur unwesentlich eindringen kann, können erfindungsgemäß auch solche Probeträger verwendet werden, die eine saugfähige Schicht aufweisen, in welche die Probeflüssigkeit eindringt. Für eine quantitative Auswertung ist es von Bedeutung, daß die vom Strahlenkegel erfaßte Probemenge einen klar definierten Wert annimmt. Dies kann bei saugfähigen Schichten dann erreicht werden, wenn die Eindringtiefe des Meßstrahles in die saugfähige Schicht reproduzierbar ist und ebenfalls das Probevolumen in dem vom Meßstrahl erfaßten Bereich reproduzierbar ist. Aus dem Gebiet der Teststreifen für z. B. Blutglucose sind saugfähige Schichten bekannt, die bei Aufgabe von Probeflüssigkeit eine definierte Flüssigkeitsmenge aufnehmen und überschüssige Flüssigkeit an benachbarte saugfähige Schichten weitergeben. Es ist beispielsweise eine Anordnung möglich, bei der ein mehrlagiger Teststreifen verwendet wird, dessen oberste Schicht eine definierte Flüssigkeitsmenge aufnimmt, sich unterhalb dieser Schicht eine optische Sperrschicht, z. B. aus Titandioxid, befindet und darunter eine zweite Saugschicht gelegen ist, die überschüssige Probeflüssigkeit aufnimmt. eine solche Anordnung ist beispielsweise aus der Europäischen Patentschrift EP-B-0 434 800 bekannt.

Mit der beschriebenen Anordnung von Saugschichten ist es möglich, kleine Probevolumina von der pipettierten Menge abzutrennen. Dies ist vorteilhaft, da mit dem erfindungsgemäßen Analyseverfahren auch kleinere Probevolumina, die sich nur schwierig pipetttieren lassen, gut ausgewertet werden können. Eine geeignete Anordnung von Saugschichten ermöglicht demnach eine quantitative Auswertung.

Bei einer weiteren vorteilhaften Ausgestaltung eines Probeträgers besitzt dieser einen Probeaufgabebereich, an den ein Reservoir zur Aufnahme von Flüssigkeit angeschlossen ist. Der Probeaufgabebereich ist bevorzugt eine für Strahlung zugängliche Vertiefung im Probeträger, die über einen Kanal mit dem Reservoir kommuniziert. Dabei ist es entscheidend, daß die im Reservoir befindliche Flüssigkeit für Strahlung nicht zugänglich ist. Dies ist beispielsweise gegeben, wenn das Reservoir ebenfalls eine Vertiefung an der Oberfläche des Trägers ist, die vom Strahlenkegel jedoch nicht erfaßt wird.

Die genannte Ausgestaltung des Probeträgers mit Reservoir ist von Vorteil, da sie es ermöglicht, von einem gut dosierbaren Probevolumen einen kleinen Teil für die Auswertung abzutrennen, der als solcher nur sehr ungenau mit einer Pipette dosiert werden könnte.

Die folgenden Figuren sollen zur näheren Erläuterung der Erfindung dienen.
- Figur 1:: Anordnung zur Messung in diffuser Reflexion
- Figur 2:: Probeträger, einfache Ausführung
- Figur 3:: Probeträger, erweiterte Ausführung
- Figur 4:: Methodenvergleich einer Glucose-Bestimmung in Humanseren.
- Figur 5:: Methodenvergleich einer Triglycerid-Bestimmung in Humanseren.
- Figur 6:: Methodenvergleich für Glucosebestimmungen in Kapillarblut

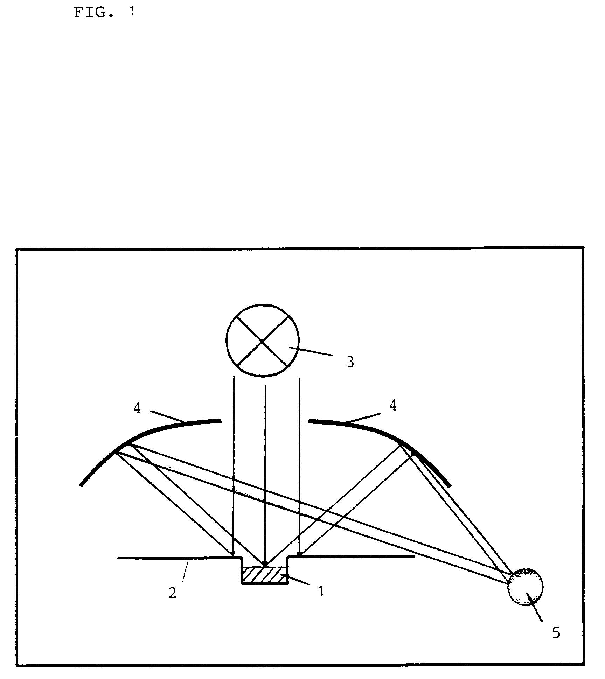

In Figur 1 ist eine Anordnung zur Messung der diffusen Reflexion von Trocknungsrest und Probeträger dargestellt. Der Trocknungsrest (1) befindet sich auf einem aufgerauhten Probeträger (2), der oberflächlich metallisiert ist. Das von der Strahlungsquelle (3) ausgesandte Strahlungsbündel tritt durch die Apertur des Parabolspiegels (4) auf den Trocknungsrest (1). Von diesem und der Oberfläche wird Strahlung diffus reflektiert und vom Parabolspiegel (4) auf den Detektor (5) gelenkt. Das von der Strahlungsquelle (3) ausgehende Strahlungsbündel ist so groß, daß es den Trocknungsrest (1) voll erfaßt und auch einen Teil des Probeträgers (2) beleuchtet.

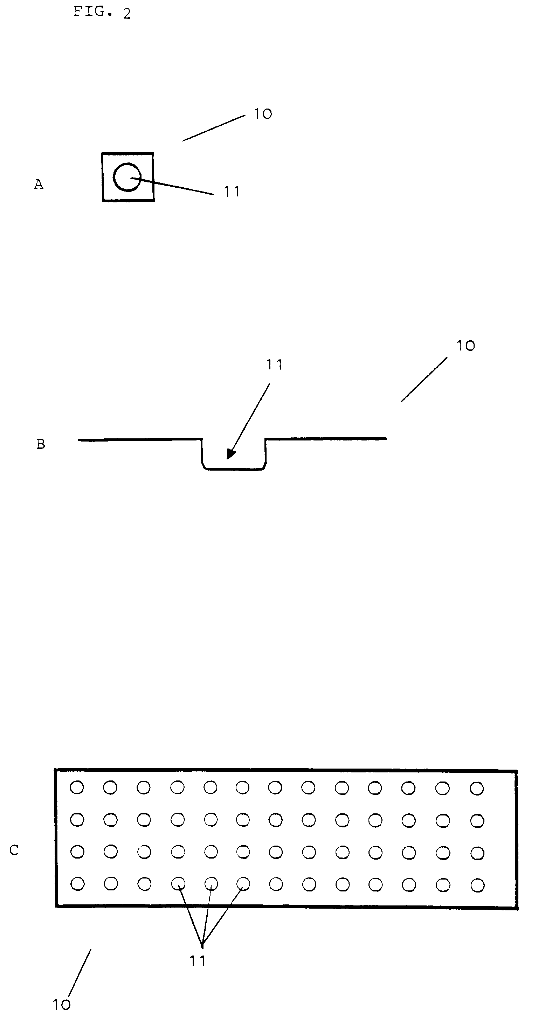

Die Figuren 2 A und 2 B zeigen einen Probeträger (10), der in einem erfindungsgemäßen System verwendet werden kann. Auf einem Trägermaterial aus Polystyrol ist eine Goldschicht von ca. 200 nm Dicke aufgesputtert. Die Vertiefung (11) in der Mitte des Probeträgers besitzt einen Durchmesser von 2.5 mm und eine Tiefe von 0.5 mm. Das Trägermaterial hat eine mittlere Rauhtiefe von ca. 5 µm.

In Figur 2 C ist ein Probeträger (10) dargestellt, der eine Vielzahl von Vertiefungen (11) aufweist. Diese Anordnung ist vorteilhaft, wenn z. B. Blutproben mehrerer Personen analysiert werden sollen oder wenn Probematerial aus einer Quelle mit unterschiedlichen Reagenzien versetzt werden soll.

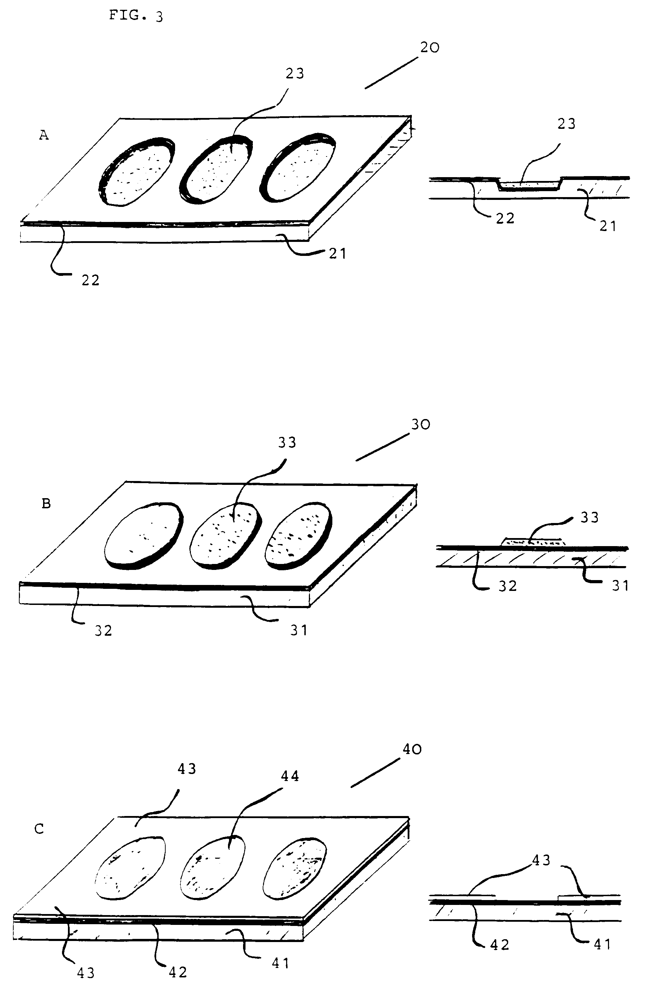

Figur 3 zeigt unterschiedliche Ausführungsformen von Probeträgern. Der Probeträger (20) in Figur 3 A besitzt eine Trägerschicht (21) aus Polystyrol, auf die ein Metallfilm (22) aus Gold aufgebracht ist. Die Vertiefung (23) des Probeträgers ist mit einer Saugschicht aus einen inerten Material, z. B. Titandioxid oder Kieselgel, gefüllt. Diese Saugschicht dient dazu, ein gleichmäßiges Ausspreiten der Flüssigkeit zu erzielen sowie die diffuse Streuung in der Probe zu verstärken. Die Saugschicht ist so dünn, daß sie von der verwendeten Strahlung durchdrungen werden kann.

Figur 3 B zeigt einen Probeträger (30), bei dem sich auf einer Trägerschicht (31) aus Polystyrol ein Goldfilm (32) befindet. Auf den Goldfilm (32) ist eine dünne Saugschicht aus Titandioxid als Erhöhung (33) aufgebracht. Durch die Saugeigenschaften dieser Schicht wird die Ausspreitung der Probeflüssigkeit auf den Bereich der Erhöhung beschränkt.

In einer erfindungsgemäßen Ausführung mit Reagenzien auf dem Trägermaterial können diese beispielsweise in die Saugschicht eingebettet und darin fixiert werden. Beim Aufbringen einer Probe findet dann eine gleichzeitige Ausspreitung und Vermischung mit Reagenzien statt. Die reflektierende Metallschicht befindet sich hierbei bevorzugt auf der zur Saugschicht abgewandten Seite eines zumindest teilweise transparenten Trägers.

In Figur 3 C ist eine weitere Ausführungsform eines Probeträgers (40) dargestellt.Wiederum besteht die Trägerschicht (41) aus Polystyrol, auf das ein Goldfilm (42) aufgebracht ist. Auf dem Goldfilm (42) befindet sich eine Teflonschicht (43), die Aussparungen (44) besitzt, in die Probeflüssigkeit gegeben werden kann. Da Teflon stark hydrophobe Eigenschaften besitzt, kann sich eine hydrophile Probeflüssigkeit nicht über eine Aussparung (44) hinausbewegen.

### Bezugszeichenliste

- (1): Trocknungsrest
- (2): Probeträger
- (3): Strahlungsquelle
- (4): Parabolspiegel
- (5): Detektor
- (10): Probeträger
- (11): Vertiefung
- (20): Probeträger
- (21): Trägerschicht
- (22): Metallfilm
- (23): Vertiefung
- (30): Probeträger
- (31): Trägerschicht
- (32): Metallfilm
- (33): Erhöhung
- (40): Probeträger
- (41): Trägerschicht
- (42): Metallfilm
- (43): hydrophobe Schicht
- (44): Aussparungen

Die folgenden Beispiele sollen die Erfindung näher erläutern:

### Beispiel 1: Glucosebestimmung in Serum

5 µl Serum wurden mit einem Dispenser aus einer Serumprobe aufgesaugt. Von den 5 µl wurde 1 µl auf eine ebene, diffus reflektierende, Oberfläche eines Probeträgers mit einer mittleren Rauhtiefe von ca. 5 µm pipettiert. Das Material des Probeträgers war vergoldetes Messing. Der Probeträger wurde bei Raumtemperatur ca. 1/2 Stunde stehen gelassen, wodurch der Tropfen eintrocknete. Der Trocknungsrest wurde in diffuser Reflexion mit einem System gemäß Fig. 1 integral vermessen. Die Messung muß in einem Zeitfenster von ca. 30 min bis max. 5 Stunden durchgeführt werden, da sonst Veränderungen an der eingetrockneten Probe auftreten, die zu unreproduzierbaren Ergebnissen führen.

Für das Beispiel Glucose wurde aus dem Spektrum ein Bereich zwischen 950 bis 1200 Wellenzahlen ausgewählt, auf den das PLS-Verfahren (partial least squares) angewendet wurde.

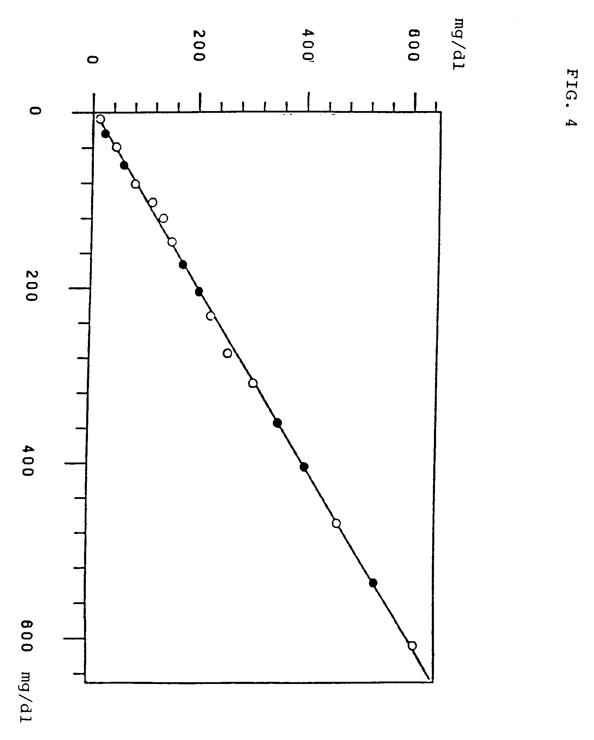

Figur 4 zeigt einen Methodenvergleich für die Bestimmung von Glucose. Auf der x-Achse sind die Konzentrationen in mg/dl der Bezugsmethode (Hexokinase-Methode) aufgetragen. Auf der Y-Achse ist das nach dem PLS-Verfahren aus dem IR-Spektrum bestimmte Vorhersagemodell für Glucose aufgetragen. Die schwarzen Punkte zeigen die Kalibration, mit der das Vorhersagemodell entwicket wurde. Die weißen Punkte zeigen unbekannte Proben, die nicht in dem Kalibrationsdatensatz enthalten waren und die aufgrund des Spektrums vorausgesagt wurden. Die Abweichungen der weißen Kreise von der Geraden vermitteln einen Eindruck von der Genauigkeit der Methode.

Die Vorhersagegenauigkeit für unbekannte Proben ist vergleichbar mit klassischen enzymatischen Methoden.

### Beispiel 2: Triglyceridbestimmung in Serum

5 µl Serum wurden von einem Dispenser aus einer beliebigen Serumprobe aufgesaugt. Von den 5 µl wurde 1 µl in eine Vertiefung von 2.5 mm Durchmesser und einer Tiefe von 0.5 mm pipettiert. Das Trägermaterial ist vergoldetes Messing mit einer Rauhtiefe von ca. 5 µm. Der Probeträger wurde bei Raumtemperatur ca. 1/2 Stunde stehen gelassen, bis der Tropfen eingetrocknet war. Danach wurde die aufgetragene Serumprobe in diffuser Reflexion mit einem System gemäß Fig. 1 integral vermessen. Die Messung muß in einem Zeitfenster von ca. 30 min bis max. 5 Stunden durchgeführt werden. Die erhaltenen Spektren wurden in Frequenbereichen zwischen 2800 und 3080 cm⁻¹ sowie 1700 und 1800 cm⁻¹ ausgewertet und daraus mit dem PLS-Verfahren ein Vorhersagemodell erstellt.

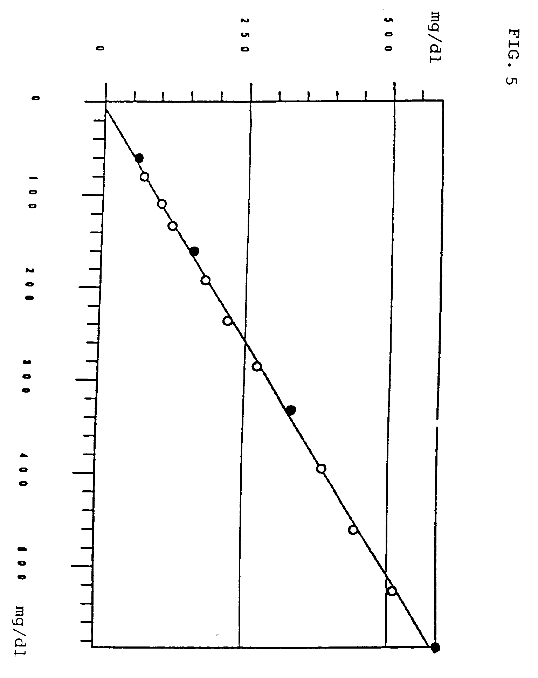

Figur 5 zeigt die Bestimmung von Triglyceriden im Vergleich zur Referenzmessung am klinischen Analyzer Hitachi 704 mit der GPO-PAP-Methode. Die schwarzen Punkte sind die Kalibrationsproben, mit denen das Vorhersagemodell erstellt wurde, die weißen Punkte stellen unbekannte Proben dar, deren Konzentration für die y-Achse auf Grundlage des Vorhersagemodells gewonnen wurde. Auch hier ist die Methode in der Präzision vergleichbar mit klassischen enzymatisch durchgeführten Verfahren.

### Beispiel 3: Vergleich von Glucosebestimmungen aus Kapillarblut

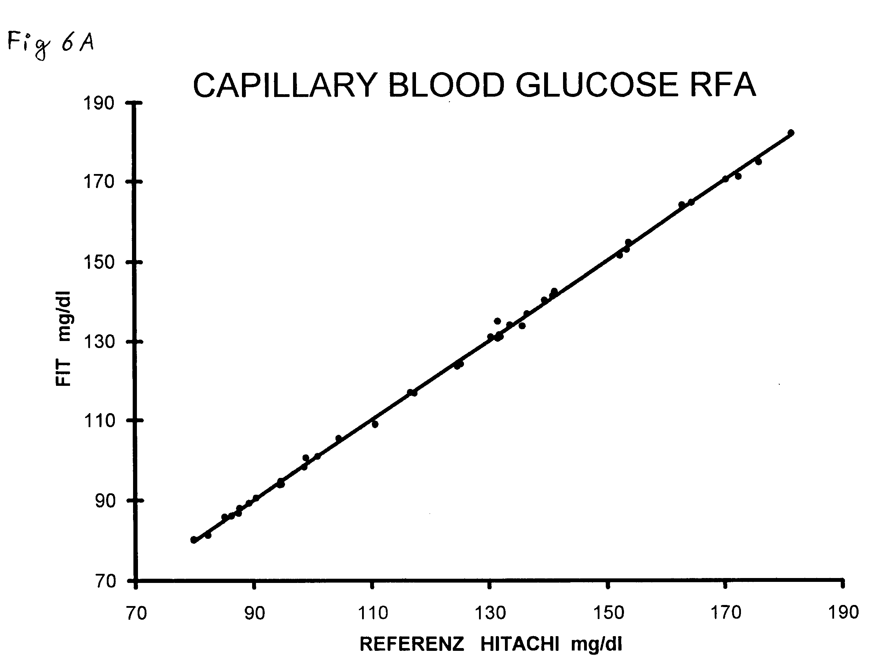

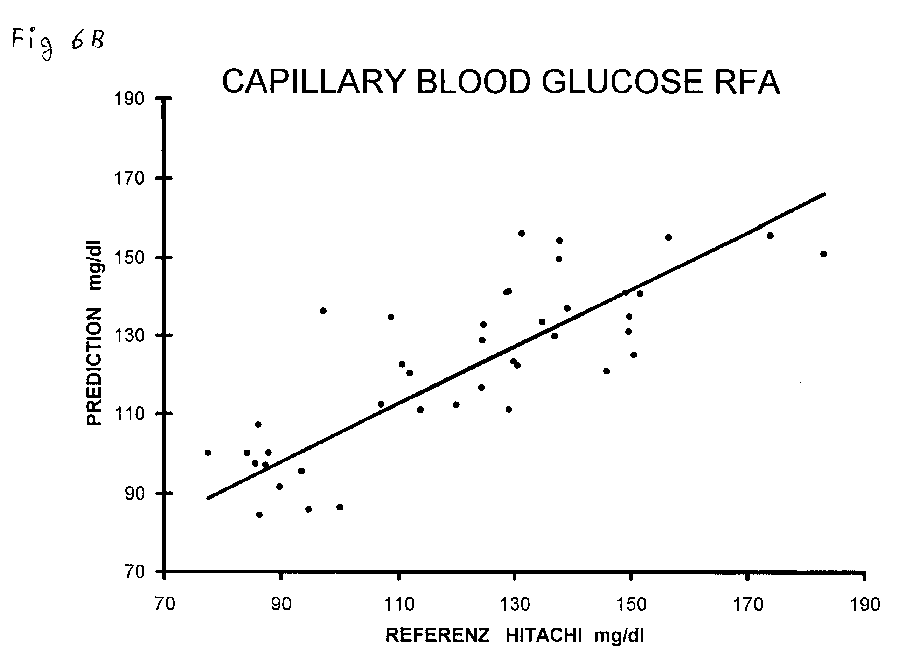

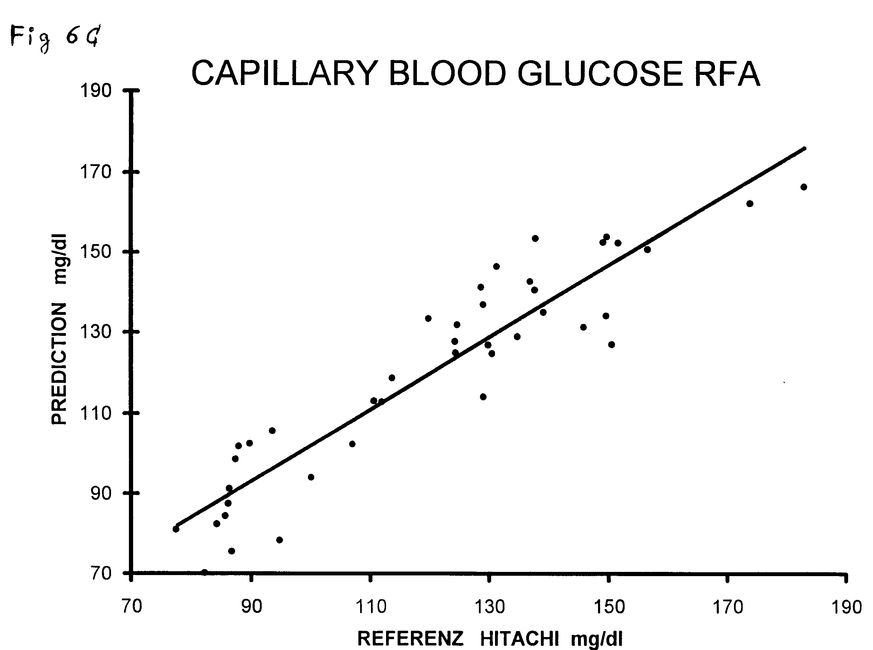

Die Figuren 6 A, 6 B und 6 C zeigen einen Methodenvergleich zur Glucosebestimmung nach dem erfindungsgemäßen Verfahren und mit dem Analysegerät 'Hitachi 704'. Bei den Messungen nach erfindungsgemäßem Verfahren wurde vorbereitete Probe auf einem goldbeschichteten Messingträger mit einer mittleren Rauhtiefe von ca. 0,5 - 1 µm aufgegeben und die Probe unter Normalraumbedingungen eingetrocknet. Für die Auswertung wurden der Wellenlängenbereich von 960 bis 1200 cm⁻¹ ausgewählt. Die Auswertung erfolgte mit einer multivariaten Statistik nach dem 'partial least squares'-Verfahren.

Figur 6 A zeigt Messungen von Kapillarblut, die zur Kalibration des erfindungsgemäßen Verfahrens verwendet wurden. Die geringe Abweichung der Meßpunkte von der eingezeichneten Geraden zeigt die gute Übereinstimmung zwischen den verwendeten Methoden.

Figur 6 B zeigt einen Vergleich der erfindungsgemäßen Methode mit einer Referenzmethode für unbehandeltes Kapillarblut. Die Messungen wurden an Proben unbekannter Glucosekonzentration vorgenommen und mit Hilfe des Vorhersagemodells aus Figur 6 A ausgewertet. Es ist eine deutliche Korrelation zwischen der erfindungsgemäßen Methode und der Referenzmethode zu erkennen.

Figur 6 C zeigt die Ergebnisse einer Hämolysat-Meßreihe. Eine Hämolyse kann durch Zugabe von Reagenzien oder im einfachsten Falle durch Zugabe von destilliertem Wasser zu Vollblut erfolgen. Hieraus resultiert ein Aufplatzen der Zellen, wobei Zellinhaltsstoffe freigesetzt werden. Das Hämolysat wird aus der behandelten Probe durch Abtrennen der Zelltrümmer, beispielsweise durch Zentrifugation, gewonnen. Die Messungen wurden an hämolysierten Kapillarblutproben unbekannter Glucosekonzentration vorgenommen und zeigen ebenfalls eine deutliche Korrelation der Methoden.

## Patentansprüche

1. Verfahren zur quantitativen Analyse von Probeflüssigkeiten, mit den Schritten:
- Aufbringen einer definierten Menge Probeflüssigkeit auf die Oberfläche eines Probeträgers,
- Trocknung der Probeflüssigkeit zur Erzielung eines Trocknungsrestes, dessen Lösungsmittelgehalt unter 20 Gewichtsprozent liegt,
- Bestrahlung des Trocknungsrestes mit einem Strahlenkegel von Strahlung aus dem infraroten und/oder sichtbaren Bereich des Spektrums in der Weise, daß sich der Trocknungsrest vollständig im Strahlenkegel befindet,
- Detektierung von Strahlung, die von Trocknungsrest und Probeträger diffus reflektiert wurde,
- Auswertung der detektierten Strahlung zur Berechnung der Konzentration eines oder mehrerer Inhaltsstoffe der Probeflüssigkeit.

2. Verfahren zur quantitativen Analyse von Probeflüssigkeit, mit den Schritten:
- Aufbringen einer definierten Menge Probeflüssigkeit auf die Oberfläche eines Probeträgers,
- Trocknung der Probeflüssigkeit zur Erzielung eines Trocknungsrestes, dessen Lösungsmittelgehalt unter 20 Gewichtsprozent liegt,
- Bestrahlung des Trocknungsrestes mit einem Strahlenkegel von Strahlung aus dem infraroten und/oder sichtbaren Bereich des Spektrums in der Weise, daß sich der Trocknungsrest vollständig im Strahlenkegel befindet,
- Detektierung von Strahlung, die von Trocknungsrest und Probeträger spiegelnd reflektiert wurde,
- Auswertung der detektierten Strahlung zur Berechnung der Konzentration eines oder mehrerer Inhaltsstoffe der Probeflüssigkeit.

3. Verfahren gemäß Anspruch 1 oder 2, bei dem weniger als 50 µl, bevorzugt 0.1 bis 10 µl Probeflüssigkeit auf die Oberfläche in zusammenhängender Form aufgebracht werden.

4. Verfahren gemäß Anspruch 1 oder 2, bei dem die Probeflüssigkeit eine Körperflüssigkeit ist.

5. Verfahren nach Anspruch 1 oder 2, bei dem die verwendete Strahlung Wellenlängen im Bereich von 0,3 bis 25 µm aufweist.

6. Verfahren nach Anspruch 1 oder 2, bei dem die verwendete Strahlung Wellenlängen im Bereich von 2,5 bis 25 µm aufweist.

7. Verfahren nach Anspruch 1 oder 2, bei dem die Probeflüssigkeit im wesentlichen nicht in die Oberfläche eindringen kann.

8. Verfahren gemäß Anspruch 1 oder 2, bei dem mehrere Messungen in zeitlichem Abstand an demselben Meßort durchgeführt werden und aus den Meßergebnissen eine Reaktionskinetik bestimmt wird.

9. Verfahren gemäß Anspruch 1 oder 2, bei dein das Aufbringen von Probeflüssigkeit auf die Probeträgeroberfläche erfolgt, indem zunächst eine Probemenge aufgegeben wird und nachfolgend ein Teil der Probemenge, der vorzugsweise über 50 % liegt, von dem Probeträger abgezogen wird.

10. Verfahren gemäß Anspruch 9, bei dem Aufgabe der Probe und Abziehen eines Teils der Probe mit der gleichen Vorrichtung erfolgt.

11. Verfahren gemäß Anspruch 1 oder 2, bei dem das Aufbringen von Probeflüssigkeit auf die Probeträgeroberfläche erfolgt, indem die Probe durch einen saugfähigen Stempel aufgenommen, der Stempel auf die Probeträgeroberfläche gepreßt wird und der Stempel von der Oberfläche abgehoben wird, wobei er Probeflüssigkeit auf der Probeträgeroberfläche zurückläßt.

12. Verfahren gemäß Anspruch 1 oder 2, bei dem der Probeflüssigkeit Detergentien, Proteine oder makromolekulare Stoffe zugesetzt werden, um die Trocknungseigenschaften der Probeflüssigkeit zu verändern.

13. System zur quantitativen Analyse von Probeflüssigkeiten mit
einer Strahlungsquelle, deren Strahlung im Bereich von 300 nm bis 25 µm liegt und eine Vorrichtung zur Fokussierung besitzt,
einem Probeträger, der zumindest in Teilbereichen auftreffende Strahlung diffus oder spiegelnd reflektiert,
einer Dosiervorrichtung zur Aufgabe von Probeflüssigkeiten auf den Probeträger,
einer Detektionsvorrichtung für von der Probe ausgesandte Strahlung
und einer Auswertevorrichtung für Signale der Detektionseinrichtung,
dadurch gekennzeichnet, daß Dosierung der Probeflüssigkeit und Fokussierung so aufeinander abgestimmt sind, daß die eingetrocknete Probe auf dem Probeträger vollständig von Strahlung der Strahlungsquelle erfaßt wird.

14. System zur Analyse von Probeflüssigkeiten gemäß Anspruch 13, bei dem der Probeträger zumindest stellenweise mit Metall beschichtet ist.

15. System zur quantitativen Analyse von Probeflüssigkeit gemäß Anspruch 13, bei dem die Oberfläche, auf welche die Probeflüssigkeit aufgebracht wird, zumindest teilweise transparent für die verwendete Strahlung ist und bei dem die dieser Oberfläche gegenüberliegende Seite mit einer die Strahlung diffus oder spiegelnd reflektierenden Schicht versehen ist.

16. System zur Analyse von Probeflüssigkeiten gemäß Anspruch 13, bei dem der Probeträger eine mittlere Rauhtiefe von weniger als 200 µm, vorzugsweise 0,5 bis 50 µm, aufweist.

17. System zur Analyse von Probeflüssigkeit gemäß Anspruch 13, bei dem der Probeträger eine Oberflächenrauhigkeit von weniger als 0,5 µm besitzt.

18. System zur Analyse von Probeflüssigkeiten gemäß Anspruch 13, bei dem der Probeträger eine oder mehrere Vertiefungen aufweist, die Probeflüssigkeit aufnehmen können.

19. System zur Analyse von Probeflüssigkeiten gemäß Anspruch 13, bei dem die Detektionsvorrichtung ein oder mehrere Halbleiterdetektoren für den jeweiligen Spektralbereich beinhaltet.

20. System zur Analyse von Probeflüssigkeiten gemäß Anspruch 13, bei dem die Detektionsvorrichtung ein Infrarotmikroskop ist.

21. System zur Analyse von Probeflüssigkeiten gemäß Anspruch 13, bei dem der Probeträger mehrere Probenaufgabestellen besitzt.

22. System zur Analyse von Probeflüssigkeiten gemäß Anspruch 13, bei dem auf dem Probeträger an einer oder mehreren Stellen Reagenzien aufgebracht sind.

23. Probeträger, bei dem mindestens eine Oberfläche des Trägers mit einer reflektierenden Schicht beschichtet ist, wobei die beschichtete Oberfläche dadurch gekennzeichnet ist, daß sie eine mittlere Rauhtiefe von weniger als 200 µm, vorzugsweise 0,5 bis 50 µm aufweist.

24. Probeträger gemäß Anspruch 23, mit einer mittleren Rauhtiefe von weniger als 0,5 µm.

25. Probeträger gemäß Anspruch 23, dadurch gekennzeichnet, daß ein oder mehrere Vertiefungen auf der mindestens einen Oberfläche des Probeträgers vorhanden sind.

26. Probeträger gemäß Anspruch 23, in dessen Vertiefungen sich Reagenzien befinden.

27. Probeträger gemäß Anspruch 23, bei dem das Probeträgermaterial zumindest teilweise für Strahlung im Bereich von 0,3 bis 25 µm transparent ist.

28. Probeträger gemäß Anspruch 27, bei dem sich auf der gegenüberliegenden Seite der reflektierenden Beschichtung Reagenzien befinden.

29. Probeträger gemäß Anspruch 23, bei dem die beschichtete Oberfläche aus glatten und rauhen Bereichen besteht.

30. Probeträger gemäß Anspruch 29, bei dem die rauhen Bereiche eine kreisförmige Gestalt haben und einen Durchmesser von 1 bis 20 mm besitzen.

31. Probeträger gemäß Anspruch 23, bei dem die zur Probenaufgabe dienende Oberfläche zumindest teilweise mit einer hydrophilen und/oder hydrophoben Beschichtung versehen ist.
